# EUROPEAN PATENT APPLICATION

(11) **EP 4 387 149 A1**
(43) Date of publication of application: **19.06.2024**
(21) Application number: 22871873.0
(22) Date of filing: 15.09.2022
(51) Int. Cl.: H04L 5/00

(54) **PAGING METHOD AND DEVICE**

(30) Priority: 26.09.2021 CN 202111130909
(71) Applicant: Huawei Technologies Co., Ltd., Shenzhen, Guangdong 518129 (CN)
(72) Inventor: ZHOU, Han, Shenzhen, Guangdong 518129 (CN); TIE, Xiaolei, Shenzhen, Guangdong 518129 (CN); ZHANG, Zhanzhan, Shenzhen, Guangdong 518129 (CN); HUANG, Wenwen, Shenzhen, Guangdong 518129 (CN)
(74) Representative: Epping - Hermann - Fischer
(86) International application number: PCT/CN2022/119071
(87) International publication number: WO 2023/045826

(57) **Abstract**

A paging method and an apparatus are disclosed. The method includes: A terminal determines a first time unit based on a time unit in which a wake up signal is detected; selects some paging occasions from a plurality of configured paging occasions based on the first time unit; and monitors a paging PDCCH on the selected paging occasions. Compared with a method in which the terminal monitors the paging PDCCH on each configured paging occasion, this method can reduce power consumption of the terminal.

## Description

### CROSS-REFERENCE TO RELATED APPLICATIONS

This application claims priority to Chinese Patent Application No. 202111130909.5, filed with the China National Intellectual Property Administration on September 26, 2021, and entitled "PAGING METHOD AND APPARATUS", which is incorporated herein by reference in its entirety.

### TECHNICAL FIELD

Embodiments of this application relate to the field of communication technologies, and in particular, to a paging method and an apparatus.

### BACKGROUND

To reduce power consumption of a terminal, in new radio (new radio, NR), the terminal does not continuously monitor a physical downlink control channel (physical downlink control channel, PDCCH), but periodically wakes up the terminal to monitor the PDCCH. How to monitor a paging PDCCH for the terminal in an idle (idle) mode and an inactive (inactive) mode to avoid missing monitoring on paging performed by a base station on the terminal is a technical problem to be resolved in embodiments of this application.

### SUMMARY

Embodiments of this application provide a paging method and an apparatus, so that a terminal monitors a paging PDCCH.

According to a first aspect, a paging method is provided. The paging method includes: A terminal determines a first time unit based on a time unit in which a wake up signal is detected; the terminal receives configuration information, where the configuration information is used to configure a plurality of paging occasions; the terminal selects a paging occasion from the plurality of paging occasions based on the first time unit; and the terminal monitors a paging PDCCH on the selected paging occasion.

According to the foregoing method, when the wake up signal is detected, the terminal may select, from the plurality of preconfigured paging occasions based on the time unit in which the wake up signal is detected, the paging occasion for monitoring the PDCCH. There is no need to monitor the paging PDCCH on all configured paging occasions. This reduces power consumption of the terminal.

In a design, that the terminal selects a paging occasion from the plurality of paging occasions based on the first time unit includes: The terminal determines a paging time window based on the first time unit; and the terminal selects a paging occasion in the paging time window from the plurality of paging occasions.

According to the foregoing method, when the wake up signal is detected, the terminal may determine the first time unit based on the time unit in which the wake up signal is detected; the terminal determines the paging time window based on the first time unit; and the terminal monitors the paging PDCCH on the paging occasion in the paging time window. Optionally, on a paging occasion outside the paging time window, the terminal may no longer monitor the paging PDCCH. Compared with a method in which the terminal monitors the paging PDCCH on all configured paging occasions, this method can reduce power consumption of the terminal.

In a design, that the terminal determines a paging time window based on the first time unit includes: The terminal determines a start time of the paging time window based on the first time unit and a first offset value; and the terminal determines an end time of the paging time window based on the start time of the paging time window and a length of the paging time window.

The first offset value may be predefined, configured by a network device for the terminal, or the like. This is not limited. The first offset value may be a preparation time period for monitoring the paging PDCCH by the terminal. Within the first offset value, the terminal may perform some preparatory operations for monitoring the paging PDCCH, for example, enabling a main receiver or another operation.

According to the foregoing method, the first time unit is the time unit in which the terminal detects the wake up signal. In one case, the first offset value is an offset value between the first time unit and the start time of the paging time window. Before monitoring the paging PDCCH in the paging time window, the terminal may perform some preparatory operations in advance. For example, as described above, the terminal may enable the main receiver, or perform another operation. The terminal may perform the preparatory operations in a time period corresponding to the first offset value, to increase a probability that the terminal successfully monitors the paging PDCCH. It should be noted that, if the first offset value is not set, the terminal directly starts to monitor the paging PDCCH when the wake up signal is detected. If the terminal is not prepared for monitoring the paging PDCCH, monitoring for the paging PDCCH may fail.

In one design, the wake up signal is modulated in an on-off keying OOK manner.

According to the foregoing method, detection of an OOK signal by the terminal may be completed through an envelope detection operation, and power consumption is extremely low. Therefore, power consumption of the terminal can be reduced by modulating the wake up signal in the OOK manner. It should be noted that, if the wake up signal is modulated in the OOK manner, the terminal may continuously detect the wake up signal in a low power consumption mode. For example, the terminal may always enable a low-power receiver to detect the wake up signal. Compared with a method in which the terminal detects the wake up signal by using the main receiver at a specific location before a PO, this method can reduce power consumption of the terminal.

In a design, that the terminal detects the wake up signal in the low power consumption mode further includes: The terminal enables a normal power consumption mode based on the start time of the paging time window.

In a design, the method further includes: If the paging PDCCH fails to be monitored on the selected paging occasion in the paging time window, the terminal disables the normal power consumption mode.

According to the foregoing method, if the terminal does not monitor the paging PDCCH in the paging time window, it indicates that the terminal does not need to perform a subsequent operation based on scheduling of the paging PDCCH, and may continue to monitor the wake up signal in the low power consumption mode. In the foregoing design, the normal power consumption mode of the terminal is disabled, to reduce power consumption of the terminal.

In a design, the wake up signal includes a first field and a second field. The first field indicates an indication function of the second field. The indication function includes a paging indication and a random access indication. The paging indication indicates the terminal to monitor the paging PDCCH on the selected paging occasion. The random access indication indicates the terminal to initiate random access.

According to a second aspect, a communication method is provided. The communication method includes: A terminal detects a wake up signal, where the wake up signal includes a first field and a second field, and the first field indicates an indication function of the second field; and when the indication function includes a paging indication, the terminal monitors a paging PDCCH on a paging occasion; or when the indication function includes a random access indication, the terminal initiates random access on a random access resource.

According to the foregoing method, the wake up signal is improved. The first field and the second field are set to indicate the terminal to monitor the paging PDCCH, or indicate the terminal to initiate random access, so that the wake up signal is flexibly designed, and a function of the wake up signal is enhanced. In addition, compared with an existing specification in NR, in the solution in which the wake up signal indicates the terminal to initiate random access, the terminal receives a paging message based on scheduling of paging DCI on a paging PDCCH, and performs random access based on an indication of the paging message. In this design, steps that need to be performed by the terminal to perform random access can be shortened, and power consumption of the terminal, an operation time period, and the like can be reduced.

In a design, the terminal detects the wake up signal in a low power consumption mode.

According to the foregoing method, a network device modulates the wake up signal in an OOK modulation manner, and the terminal detects the wake up signal in a low power consumption mode. Compared with detecting the wake up signal in a normal power consumption mode or a high power consumption mode, detecting the wake up signal in the low power consumption mode can reduce power consumption of the terminal.

In a design, the terminal monitors the paging PDCCH in the normal power consumption mode.

According to a third aspect, a communication method is provided. The third aspect is a network device side corresponding to the second aspect. For beneficial effect, refer to the second aspect. The communication method includes: A network device determines a sending occasion of a wake up signal; and the network device sends the wake up signal on the sending occasion, where the wake up signal includes a first field and a second field, the first field indicates an indication function of the second field, and the indication function includes a paging indication indicating a terminal to monitor a paging PDCCH on a paging occasion, or the indication function includes a random access indication indicating the terminal to initiate random access.

According to a fourth aspect, an apparatus is provided. For beneficial effect, refer to the description of the first aspect. The apparatus may be a terminal, a module configured in the terminal, or another apparatus having a function of the terminal. In a design, the apparatus includes a unit for performing the method described in the first aspect. The unit may be a hardware circuit, may be software, or may be implemented by a hardware circuit in combination with software. For example, the apparatus may include a processing unit and a communication unit, and the processing unit and the communication unit may perform corresponding functions in any design example of the first aspect. Specifically, the processing unit is configured to determine a first time unit based on a time unit in which a wake up signal is detected; the communication unit is configured to receive configuration information, where the configuration information is used to configure a plurality of paging occasions; and the processing unit is further configured to select a paging occasion from the plurality of paging occasions based on the first time unit; and monitor a paging PDCCH on the selected paging occasion.

For a specific execution process of the communication unit and the processing unit, refer to the first aspect.

According to a fifth aspect, an apparatus is provided. For beneficial effect, refer to the description of the first aspect. The apparatus includes a processor, configured to implement the method described in the first aspect. The apparatus may further include a memory, configured to store instructions and/or data. The memory is coupled to the processor. When the processor executes the program instructions stored in the memory, the method described in the first aspect is implemented. The apparatus may further include a communication interface, and the communication interface is used by the apparatus to communicate with another device. For example, the communication interface may be a transceiver, a circuit, a bus, a pin, or another type of communication interface. In a possible design, the apparatus includes:
a memory, configured to store program instructions;
a communication interface, configured to perform a function of the communication unit in the fourth aspect; and
a processor, configured to perform a function of the processing unit in the fourth aspect. According to a sixth aspect, an apparatus is provided. For beneficial effect, refer to the description of the second aspect. The apparatus may be a terminal, a module configured in the terminal, or another apparatus having a function of the terminal. In a design, the apparatus includes a unit for performing the method described in the second aspect. The unit may be a hardware circuit, may be software, or may be implemented by a hardware circuit in combination with software. For example, the apparatus may include a processing unit and a communication unit, and the processing unit and the communication unit may perform corresponding functions in any design example of the second aspect. Specifically, the communication unit is configured to detect a wake up signal, where the wake up signal includes a first field and a second field, and the first field indicates an indication function of the second field; and the processing unit is configured to: when the indication function includes a paging indication, monitor a paging PDCCH on a paging occasion; or when the indication function includes a random access indication, initiate random access on a random access resource.

For a specific execution process of the communication unit and the processing unit, refer to the second aspect.

According to a seventh aspect, an apparatus is provided. For beneficial effect, refer to the description of the second aspect. The apparatus includes a processor, configured to implement the method described in the second aspect. The apparatus may further include a memory, configured to store instructions and/or data. The memory is coupled to the processor. When the processor executes the program instructions stored in the memory, the method described in the second aspect is implemented. The apparatus may further include a communication interface, and the communication interface is used by the apparatus to communicate with another device. For example, the communication interface may be a transceiver, a circuit, a bus, a pin, or another type of communication interface. In a possible design, the apparatus includes:
a memory, configured to store program instructions;
a communication interface, configured to perform a function of the communication unit in the sixth aspect; and
a processor, configured to perform a function of the processing unit in the sixth aspect. According to an eighth aspect, an apparatus is provided. For beneficial effect, refer to the description of the third aspect. The apparatus may be a network device, a module configured in the network device, or another apparatus having a function of the network device. In a design, the apparatus includes a unit for performing the method described in the third aspect. The unit may be a hardware circuit, may be software, or may be implemented by a hardware circuit in combination with software. For example, the apparatus may include a processing unit and a communication unit, and the processing unit and the communication unit may perform corresponding functions in any design example of the third aspect. Specifically, the processing unit is configured to determine a sending occasion of a wake up signal; and the communication unit is configured to send the wake up signal on the sending occasion, where the wake up signal includes a first field and a second field, the first field indicates an indication function of the second field, and the indication function includes a paging indication indicating a terminal to monitor a paging PDCCH on the paging occasion, or the indication function includes a random access indication indicating the terminal to initiate random access.

For a specific execution process of the communication unit and the processing unit, refer to the third aspect.

According to a ninth aspect, an apparatus is provided. For beneficial effect, refer to the description of the third aspect. The apparatus includes a processor, configured to implement the method described in the third aspect. The apparatus may further include a memory, configured to store instructions and/or data. The memory is coupled to the processor. When the processor executes the program instructions stored in the memory, the method described in the third aspect is implemented. The apparatus may further include a communication interface, and the communication interface is used by the apparatus to communicate with another device. For example, the communication interface may be a transceiver, a circuit, a bus, a pin, or another type of communication interface. In a possible design, the apparatus includes:
a memory, configured to store program instructions;
a communication interface, configured to perform a function of the communication unit in the eighth aspect; and
a processor, configured to perform a function of the processing unit in the eighth aspect. According to a tenth aspect, an embodiment of this application further provides a computer-readable storage medium that stores instructions. When the instructions are run on a communication apparatus, the communication apparatus is enabled to perform the method in the first aspect, the second aspect, or the third aspect.

According to an eleventh aspect, an embodiment of this application further provides a chip system. The chip system includes a processor, may further include a memory, and is configured to implement the method in the first aspect, the second aspect, or the third aspect. The chip system may include a chip, or may include a chip and another discrete component.

According to a twelfth aspect, an embodiment of this application further provides a computer program product, including instructions. When the instructions are run on a communication apparatus, the communication apparatus is enabled to perform the method in the first aspect, the second aspect, or the third aspect.

According to a thirteenth aspect, an embodiment of this application further provides a system. The system includes the apparatus in the fourth aspect, the fifth aspect, the sixth aspect, or the seventh aspect, and the apparatus in the eighth aspect or the ninth aspect.

### BRIEF DESCRIPTION OF DRAWINGS

FIG. 1 is a schematic diagram of a communication system according to an embodiment of this application;
FIG. 2 is a schematic diagram of detection of a WUS according to an embodiment of this application;
FIG. 3 is a flowchart of a paging method according to an embodiment of this application;
FIG. 4a is a schematic diagram of a paging time window according to an embodiment of this application;
FIG. 4b is another schematic diagram of a paging time window according to an embodiment of this application;
FIG. 5 is a schematic diagram of a WUS according to an embodiment of this application;
FIG. 6 is a schematic diagram of a communication method according to an embodiment of this application;
FIG. 7 and FIG. 8 are schematic diagrams of communication apparatuses according to embodiments of this application;
FIG. 9 is a schematic diagram of monitoring a paging PDCCH by a terminal according to an embodiment of this application;
FIG. 10 is a schematic diagram of a MO according to an embodiment of this application; and
FIG. 11 is a schematic diagram of a correspondence between an SSB and a MO according to an embodiment of this application.

### DESCRIPTION OF EMBODIMENTS

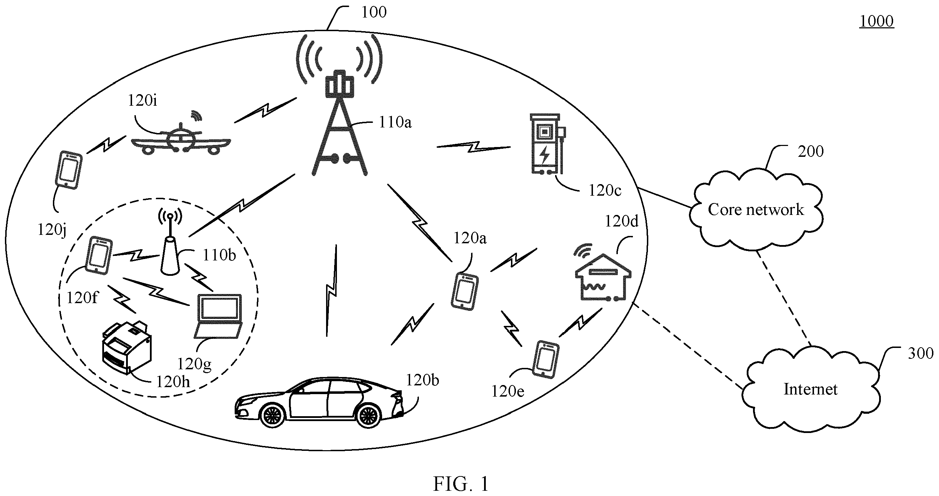

FIG. 1 is a schematic diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connections between terminals and between radio access network devices. FIG. 1 is merely a schematic diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like; or may be a module or a unit, for example, a central unit (central unit, CU) or a distributed unit (distributed unit, DU), that completes some functions of a base station. The CU completes functions of a radio resource control (radio resource control, RRC) protocol and a packet data convergence protocol (packet data convergence protocol, PDCP) of a base station, and may further complete a function of a service data adaptation protocol (service data adaptation protocol, SDAP). The DU completes functions of a radio link control (radio link control, RLC) layer and a medium access control (medium access control, MAC) layer of a base station, and may further complete functions of some physical (physical, PHY) layers or all physical layers. For specific descriptions of the foregoing protocol layers, refer to related technical specifications of a 3rd generation partnership project (3rd generation partnership project, 3GPP). The radio access network device may be a macro base station (for example, 110a in FIG. 1), may be a micro base station or an indoor base station (for example, 110b in FIG. 1), or may be a relay node, a donor node, or the like. A specific technology and a specific device form that are used by the radio access network device are not limited in embodiments of this application. For ease of description, the following provides descriptions by using an example in which the radio access network device is a base station.

The terminal may also be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form used by the terminal are not limited in embodiments of this application.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the helicopter or uncrewed aerial vehicle 120i in FIG. 1 may be configured as a mobile base station. For the terminal 120j that accesses the radio access network 100 by using the 120i, the terminal 120i is a base station. However, for the base station 110a, the 120i is a terminal, that is, the 110a and the 120i communicate with each other via a wireless air interface protocol. Certainly, the 110a and the 120i may also communicate with each other via an interface protocol between base stations. In this case, for the 110a, the 120i is also a base station. Therefore, both the base station and the terminal may be collectively referred to as communication apparatuses. The 110a and the 110b in FIG. 1 may be referred to as communication apparatuses having a base station function, and the 120a to the 120j in FIG. 1 may be referred to as communication apparatuses having a terminal function.

Communication may be performed between a base station and a terminal, between base stations, and between terminals through a licensed spectrum, through an unlicensed spectrum, or through both a licensed spectrum and an unlicensed spectrum. Communication may be performed through a spectrum below 6 gigahertz (gigahertz, GHz), through a spectrum above 6 GHz, or through both a spectrum below 6 GHz and a spectrum above 6 GHz. A spectrum resource for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios such as the smart grid, the industrial control, the smart transportation, and the smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal may establish a wireless connection to a cell controlled by the base station. A cell that establishes a wireless connection to the terminal is referred to as a serving cell of the terminal. When communicating with the serving cell, the terminal is further interfered by a signal from a neighboring cell.

It may be understood that, in embodiments of this application, a physical downlink shared channel (physical downlink shared channel, PDSCH) and a physical downlink control channel (physical downlink control channel, PDCCH) are merely examples of a downlink data channel and a downlink control channel. In different systems and different scenarios, the data channel and the control channel may have different names. This is not limited in embodiments of this application. In new radio (new radio, NR), a status of the terminal includes a connected (connected) mode, an idle (idle) mode, an inactive (inactive) mode, and the like. The idle mode is a mode in which the terminal completes camping in a cell but does not perform random access or fails to perform random access. The terminal usually enters the idle mode after being powered on or after an RRC release is performed. The idle mode corresponds to the connected mode. The connected mode is a mode in which the terminal completes random access, establishes an RRC connection, and the RRC connection is not released. In the connected mode, the terminal may perform data transmission with the base station. When the terminal device is in the idle mode, after the terminal completes random access, the terminal switches to the connected mode. When the terminal is in the connected mode, after the terminal performs the RRC release, the terminal switches to the idle mode. The inactive mode is a mode between the connected mode and the idle mode. In the inactive mode, a user plane of an air interface is suspended (suspend), and a user plane bearer and a control plane bearer between a radio access network (radio access network, RAN) and a core network (core network, CN) are maintained. When the terminal initiates a call or a service request, a user plane bearer of the air interface needs to be activated, and the existing user plane bearer and the existing control plane bearer between the RAN and the CN are reused. How to reduce power consumption of the terminal in the idle mode and the inactive mode is a research direction.

To reduce power consumption of the terminal, a discontinuous reception (discontinuous reception, DRX) mechanism is introduced. When the DRX mechanism is configured, the terminal does not continuously monitor a PDCCH. Instead, the terminal periodically enters a sleep mode (sleep mode) at some time. In the sleep mode, the terminal does not need to monitor the PDCCH. When monitoring is required, the terminal wakes up (wake up) the terminal from the sleep mode, thereby saving power. For the terminal in the idle mode and the inactive mode, the configured DRX may be referred to as idle-DRX (idle-DRX, I-DRX). When DRX is configured for the terminal, the terminal enters a deep sleep mode (deep sleep mode) in all time except for a paging frame. In the deep sleep mode, a main receiver of the terminal also enters a deep sleep state, and power consumption of the terminal is low. The terminal switches to a normal power consumption mode in the paging frame, and monitors a paging PDCCH on a paging occasion (paging occasion, PO) in the paging frame. If the paging PDCCH is successfully monitored on the PO, the terminal may receive, on the paging PDCCH, downlink control information (downlink control information, DCI) for paging scheduling. The terminal receives a paging message based on scheduling of the DCI. The terminal performs random access or another operation based on an indication of the paging message. It should be noted that the DCI may be referred to as paging DCI because the DCI is used to schedule the paging message. The DCI may be scrambled by using a paging radio network temporary identifier (paging radio network temporary identifier, P-RNTI).

In the foregoing solution, the terminal monitors the paging PDCCH on each configured PO, and consequently power consumption of the terminal is high. This application provides a paging method, including: The terminal selects, from configured POs based on a first time unit in which a wake up signal (wake up signal, WUS) is detected, a PO for monitoring; and the terminal monitors the PDCCH on the selected PO. The terminal does not need to monitor the paging PDCCH on each configured PO, thereby reducing power consumption of the terminal.

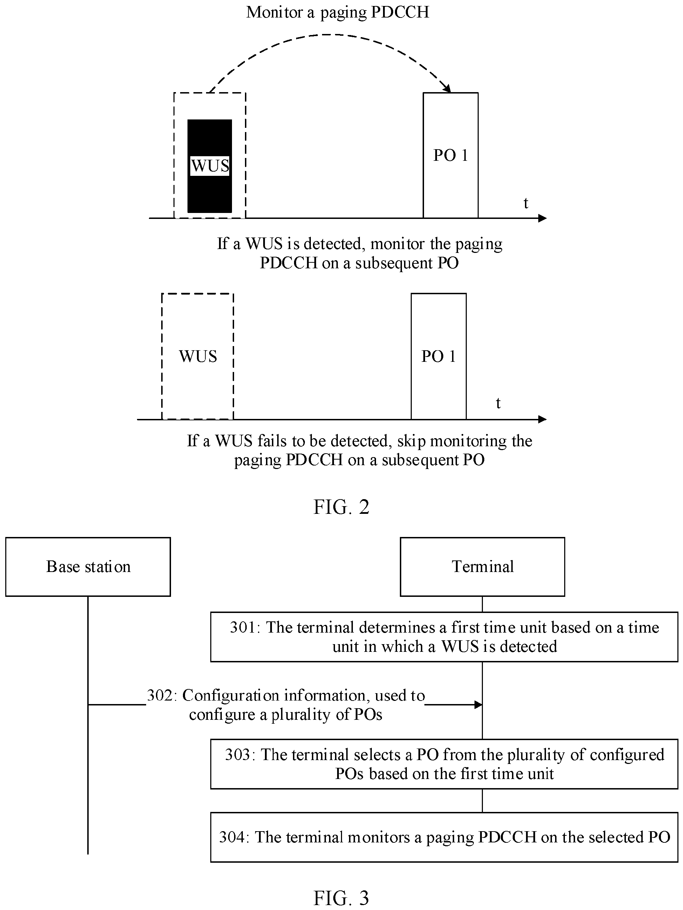

It should be noted that, in the solution of this application, the WUS may be modulated in a simple modulation manner, for example, the WUS may be modulated in an on-off keying (On-off keying, OOK) manner or the like. The terminal may enable a low power consumption mode to detect the WUS, thereby further reducing power consumption of the terminal. This design may be compared with a current WUS-based paging mechanism. As shown in FIG. 2, in the current WUS-based paging mechanism, the base station sends the WUS at a specific location before the PO. If the terminal detects the WUS at the specific location, the terminal monitors the paging PDCCH on a PO after the WUS. Otherwise, the paging PDCCH does not need to be monitored on the PO after the WUS. Because one PO is usually configured in each DRX cycle, the DRX cycle may also be considered as a PO period. The terminal enables the normal power consumption mode at a specific location before each PO based on the DRX cycle, to detect the WUS. Through comparison, in the current WUS-based paging mechanism, the terminal enables the normal power consumption mode at a specific location before each configured PO, to detect the WUS. However, in the solution of this application, the terminal always enables the low power consumption mode to detect the WUS. It is found through simulation that, compared with the solution in which the terminal in this application always enables the low power consumption mode to detect the WUS, in the foregoing solution in the current WUS-based paging mechanism, the normal power consumption mode is enabled at a specific location before each configured PO to detect the WUS. Power consumption of the terminal can be further reduced.

For ease of understanding, communication nouns or terms in this application are first explained or described, and the explanation or description is also used as a part of this application.

### 1. WUS

The WUS may be a signal having a wake-up function. For example, the WUS may be generated based on a sequence, for example, an m-sequence, a Gold sequence, or a (Zadoff-Chu, ZC) sequence, or the like. In this application, the WUS may be modulated in an OOK manner, and detection of the OOK signal by a terminal may be completed through an envelope detection operation. Therefore, power consumption is extremely low.

### 2. PO

One PO may include one or more PDCCH monitor occasions (monitor occasion, MO). A base station may send a paging PDCCH in a time-frequency resource corresponding to the PDCCH monitor occasion. Correspondingly, the terminal may monitor the paging PDCCH in the time-frequency resource corresponding to the PDCCH monitor occasion. The time-frequency resource corresponding to the PDCCH monitor occasion may include a paging search space and a control resource set (control resource set, CORESET).

### 3. Time unit

In this application, a unit of the time unit may be a radio frame, a subframe, a slot, a sub-slot, a symbol, or the like. One radio frame may include one or more subframes, and one subframe may include one or more slots. There may be different slot lengths for different subcarrier spacings. For example, when the subcarrier spacing is 15 kHz, one slot may be 1 millisecond. When the subcarrier spacing is 30 kHz, one slot may be 0.5 milliseconds or the like. One slot may include one or more symbols. For example, a slot with a normal cyclic prefix (cyclic prefix, CP) may include 14 time domain symbols, and a slot with an extended CP may include 12 time domain symbols. The time domain symbol may be briefly referred to as a symbol. The time domain symbol may be an orthogonal frequency division multiplexing (orthogonal frequency division multiplexing, OFDM) symbol, or may be a discrete Fourier transform spread orthogonal frequency division multiplexing (discrete Fourier transform spread orthogonal frequency division multiplexing, DFT-s-OFDM) symbol. The sub-slot may also be referred to as a micro-slot, a minislot, or the like, and may be a unit smaller than a slot. One sub-slot may include one or more symbols. For example, one sub-slot may include two symbols, four symbols, seven symbols, or the like. One slot may include one or more sub-slots.

### 4. Low power consumption mode and normal power consumption mode

In a design, the low power consumption mode may mean that a terminal enables only some components in a main receiver, for example, a radio frequency front end. The normal power consumption mode may mean that the terminal enables the entire main receiver. In this design, only the main receiver may be deployed in the terminal. For example, the main receiver (or referred to as a main circuit module) of the terminal includes the following structures:
1. a receive antenna or an antenna array;
2. a radio frequency filter (radio frequency, RF, filter), which may be generally a bandpass filter;
3. a radio frequency amplifier (RF amplifier), for example, a low noise amplifier (low noise amplifier, LNA);
4. a local oscillator (local oscillator, LO), configured to generate a local radio frequency signal for matching with a radio frequency signal;
5. a mixer, which mixes and matches a local high-frequency signal generated by the LO and a received RF signal, and then obtains an intermediate frequency signal through downconversion; and
6. A baseband signal can be obtained through amplification, filtering, and digital downconversion of an intermediate frequency signal, and then baseband operations such as demodulation and decoding are performed.

The foregoing 1 to 5 may be referred to as radio frequency front ends. Because the radio frequency front end does not include operations such as analog-to-digital conversion, intermediate frequency filtering, and demodulation, power consumption is far lower than that of the main receiver that is in a normal working state. This can allow the main receiver to enable only the radio frequency front end to detect the WUS in the low power consumption mode.

Alternatively, in another design, a low-power receiver (or referred to as a low-power circuit) and the main receiver are deployed in the terminal. When the terminal enables only the low-power receiver, it is considered that the terminal works in the low power consumption mode. For example, the terminal may keep detecting a WUS in the low power consumption mode. When the terminal monitors the paging PDCCH, the terminal may further enable the main receiver. In this case, it is considered that the terminal works in the normal power consumption mode. It may be understood that, in this design, when the terminal works in the normal power consumption mode, the terminal enables both the low-power receiver and the main receiver.

It should be noted that, in the description of this application, the following descriptions are used: detecting a WUS, receiving configuration information, monitoring a paging PDCCH, and the like. It may be understood that descriptions such as "detecting", "receiving", and "monitoring" may be mutually replaced. For example, "detecting a WUS" may also be described as "receiving a WUS", and "monitoring a paging PDCCH" may also be described as "receiving a paging PDCCH". Even, the foregoing detecting receiving, monitoring, or the like may be replaced with detecting (detect) or the like.

### Embodiment 1

As shown in FIG. 3, this application provides a process of a paging method, including at least the following steps.

Step 301: A terminal determines a first time unit based on a time unit in which a WUS is detected. In this application, the terminal may keep detecting the WUS. Optionally, to reduce power consumption of the terminal, the terminal may, for example, enable a low-power receiver to detect the WUS in a low power consumption mode. In a design, the terminal may use the time unit in which the WUS is detected as the first time unit. Alternatively, there is an offset between the first time unit and the time unit in which the WUS is detected. For example, the WUS is detected by the terminal on a symbol in a last time domain of a subframe 1, and the first time unit may be set as a start time of a subframe 2 through quantization. In this application, how the terminal specifically determines the first time unit based on the time unit in which the WUS is detected, or a specific offset between the first time unit and the time unit in which the WUS is detected may depend on implementation of the terminal. For example, in a design, the time unit in which the WUS is detected may be located at a middle location of a PO. To ensure that a subsequent paging time window includes a complete PO, the location of the first time unit may be slightly moved backward in time, to miss the PO. Alternatively, as described above, the terminal expects the paging time window to occupy a complete subframe. If the WUS is detected in the symbol of the last slot of the subframe 1, the terminal may determine a start time of a next frame, namely, the subframe 2, as the first time unit.

Step 302: A base station sends configuration information to the terminal, where the configuration information is used to configure a plurality of POs.

For example, the base station may configure the plurality of POs for the terminal through higher layer signaling. The higher layer signaling may be a system message, an RRC message, or the like. This is not limited. In this application, the plurality of configured POs may be periodic, aperiodic, or the like. This is not limited. For example, in an implementation, a period of the plurality of configured POs may be two subframes, in other words, a PO appears once every two subframes. Alternatively, the POs are configured only in a period of time, and no PO is configured in another period of time. In this case, it is considered that the POs are aperiodic.

Optionally, a PO period defined in this application is different from a PO period defined in current DRX. Generally, the PO period defined in this application is less than the PO period defined in the current DRX. For example, a DRX cycle may be 1.28s, 2.56s, or the like. For the terminal, one or more paging frames may be configured in each DRX cycle, and each paging frame may include one PO. When one paging frame is configured in each DRX cycle, it may be considered that the PO period in the current DRX is also 1.28s, 2.56s, or the like. Alternatively, in the current DRX cycle, the PO period is usually in a unit of second (s). In this application, the configured PO period may be in a unit of millisecond (ms). For example, the configured PO period may be 10 ms. A reason for this operation may include: It can be learned from subsequent descriptions that, in this application, the terminal determines a paging time window based on the first time unit; and the terminal monitors the paging PDCCH on the PO included in the paging time window. In this application, the PO period is set to a small value, so that a large quantity of POs may be included in the paging time window. This can avoid a phenomenon that if the PO period is set to a large value, no PO exists in the entire paging time window.

Step 302 is optional. For example, step 302 may be performed after step 301, or step 302 may be performed before step 301, or may not be performed. This is not limited.

For example, step 302 may be performed before step 301. When the terminal is in a normal power consumption mode, the terminal may receive the configuration information of the PO sent by the base station, and after the terminal completes communication, the terminal returns to the low power consumption mode to detect the WUS. If the terminal finds, based on cell identity information carried in the WUS or through cell search, that no handover occurs in a cell in which the terminal camps after the WUS is detected in the low power consumption mode, it is considered that the previously received configuration information is still valid. Therefore, the configuration information of the PO does not need to be received. Alternatively, the step 302 may not be performed. For example, if the terminal is a device that does not move, like the Internet of Things, the configuration information of the PO in which the terminal camps may be written into the terminal in a manner like pre-configuration, and is not changed for a long time. Therefore, step 302 does not need to be performed.

Step 303: The terminal selects a PO from the plurality of configured POs based on the first time unit.

In a design, the terminal may determine the paging time window (paging time window, PTW) based on the first time unit.

For example, the terminal may determine a start time of the paging time window based on the first time unit and a first offset (offset) value, and determine an end time of the paging time window based on the start time of the paging time window and a length L of the paging time window. The first offset (offset) value and the length L of the paging time window may be preset, or may be configured by the base station for the terminal in advance through higher layer signaling, for example, a system message or RRC dedicated signaling. The RRC dedicated signaling may be sent by the base station to the terminal when the terminal enters a connected mode. The system message may be sent by the base station to the terminal in a manner like broadcast, and the system message is RRC common signaling. The PO in the paging time window is selected from the plurality of configured POs to monitor the paging PDCCH.

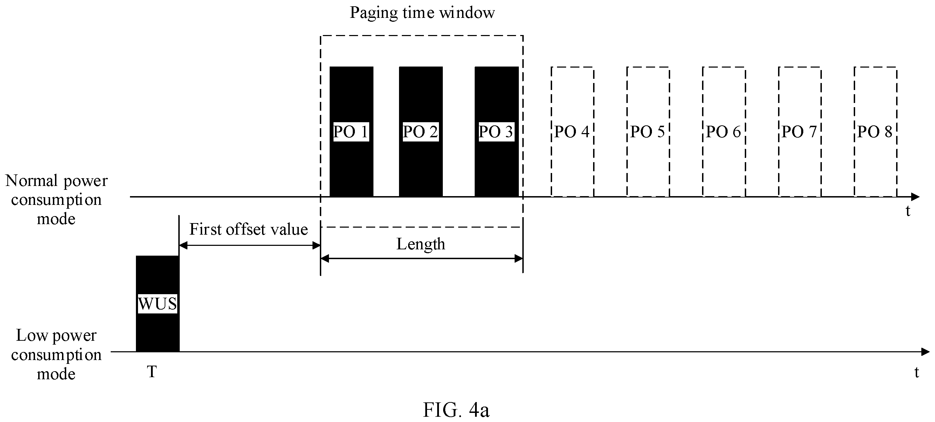

For example, as shown in FIG. 4a, the base station configures POs that appear periodically for the terminal, and the POs that appear periodically include a PO 1 to a PO 8. The terminal detects the WUS in a time unit T. A time point obtained by using the time unit T as a start point and by deviating by the first offset value along an increase direction of the time domain is used as the start time of the paging time window. The terminal determines the end time of the paging time window based on the start time of the paging time window and the length L of the paging time window. It can be seen from FIG. 4a that the paging time window includes the PO 1 to the PO 3. Subsequently, in step 304, the terminal may monitor the paging PDCCH on the PO 1 to the PO 3. Alternatively, the terminal selects the PO 1 to the PO 3 in the paging time window on the configured POs. The PO 1 to the PO 3 are POs for the terminal to monitor the paging PDCCH. The terminal does not monitor the paging PDCCH on the PO 4 to the PO 8.

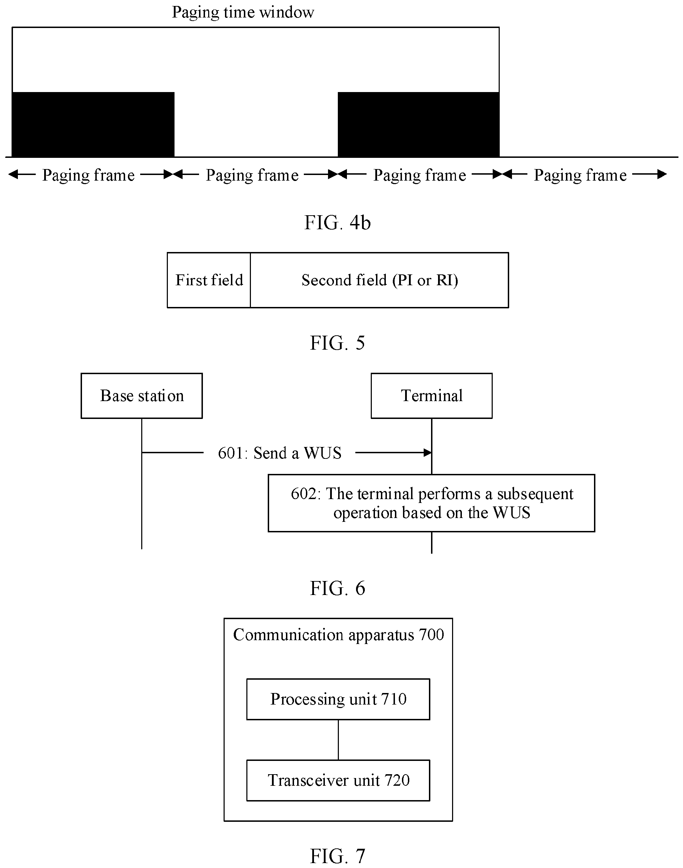

Alternatively, the paging time window may be at least one predefined paging frame (paging frame, PF) or PO. For example, the paging time window may be N PFs or N POs after the first offset value, where N is a positive integer greater than or equal to 1. For example, according to an NR protocol, one PF includes one to four POs. If the paging time window is defined as N PFs, the base station sends the paging PDCCH in POs included in the N PFs. Correspondingly, the terminal may monitor the paging PDCCH on the POs included in the N PFs. Further, the N PFs included in the paging time window may be N consecutive PFs or N inconsecutive PFs. This is not limited. Similarly, the N POs included in the paging time window may be N consecutive POs, N inconsecutive POs, or the like. This is not limited. For example, as shown in FIG. 4b, the base station configures each radio frame (radio frame) as one paging frame PF, the paging time window may be defined as two paging frames after the first offset value, and the two paging frames in the paging time window do not appear consecutively. There is a paging frame between the two paging frames.

Paging frames or POs in the paging time window are not consecutive, which has the following advantages: If the base station sends a paging PDCCH on a paging frame or a PO in the paging time window, the paging PDCCH may indicate the terminal to perform random access. For example, the base station may send the paging PDCCH on a first paging frame included in the paging time window shown in FIG. 4b. When the terminal detects the paging PDCCH in the first paging frame, if the paging PDCCH indicates the terminal to perform random access, the terminal may perform random access within an interval between the first paging frame and a second paging frame. If the base station receives random access of the terminal before the second paging frame, it indicates that random access of the terminal succeeds, and the paging PDCCH is no longer sent on the second paging frame in the paging time window. Compared with configuration of consecutive paging frames or POs in the paging time window, discontinuous configuration leaves time for the terminal to perform random access. This prevents the terminal from repeatedly sending the paging PDCCH in the paging frames or the POs.

It may be understood that the paging time window may be predefined, or may be at least one PF or PO preconfigured by the base station by using the higher layer signaling. Alternatively, the paging time window appears slidingly based on the time unit in which the WUS is detected, but does not appear periodically. Quantities of POs included in paging time windows may be different. It should be noted that the first offset value may be an offset value between the first time unit and the start time of the paging time window. Because the terminal monitors the paging PDCCH in the paging time window, the first offset value may be predefined or configured by the base station, and is a preparation time period for the terminal to monitor the PDCCH. In the preparation time period, the terminal may enable a main receiver, and perform at least one of the following operations and other operations:
1. After being powered on, the terminal in an idle mode does not determine which cell the terminal is in. Therefore, cell search (cell search) may be performed first, including performing preliminary time-frequency synchronization by using a primary synchronization signal (primary synchronization signal, PSS), a secondary synchronization signal (secondary synchronization signal, SSS), and a physical broadcast channel (physical broadcast channel, PBCH), for example, determining a frame header and a slot.
2. A cell identity (identity, ID) is obtained. The cell ID is determined mainly by using a PSS and an SSS that are sent in a synchronization signal/physical layer broadcast channel block (synchronization signal/physical broadcast channel block, SSB).
3. Gain control, also referred to as automatic gain control (automatic gain control, AGC), of the receiver is adjusted based on the SSB, to be specific, how many times a received signal is amplified is determined.
4. Fine time-frequency synchronization is performed to obtain timing and a frequency offset between a transmitter in a base station and a receiver in a terminal.
5. A master system information block (master information block, MIB) is obtained, where the MIB is placed in a PBCH in the SSB, and basic air interface configuration information of the cell may be obtained from the PBCH.
6. A system information block 1 (system information block 1, SIB 1) is received, and detailed configuration of an air interface of the cell is obtained, includes configuration related to paging receiving.

It should be noted that, according to different implementations of the terminal, the foregoing operations 1 to 6 and other operations may be performed in different sequences, or may be performed synchronously. This is not limited. In addition, the first offset value is predefined, or is configured by the base station, and is a time at which the terminal can perform the foregoing operations. Specifically, whether the terminal performs the foregoing operations within the first offset value depends on specific implementation of the terminal. This is not limited. For example, in an implementation, in the paging time window, a location at which the PO appears is late in time, and therefore, the terminal may completely skip enabling the main receiver and the foregoing operations 1 to 6 in a time period corresponding to the first offset value. In the paging time window and at a specific time location before the PO, the main receiver is enabled, and the foregoing operations 1 to 6 are performed.

Step 304: The terminal monitors the paging PDCCH on the selected PO.

Optionally, each PO may include one or more monitor occasion MOs, and the terminal specifically monitors the paging PDCCH on the MO included in each PO. If the terminal monitors the paging PDCCH on the MO, the terminal may receive and decode paging DCI through the paging PDCCH, and receive a paging message, and the like based on scheduling of the paging DCI. For example, one PO includes a plurality of MOs, and if the terminal determines to monitor the paging PDCCH on the PO, the terminal monitors, according to a time sequence, the paging PDCCH on the plurality of MOs included in the PO. For example, the paging PDCCH is monitored on a first MO included in the PO in the increase direction of the time domain. If the paging PDCCH is successfully monitored on the first MO, the terminal stops monitoring the paging PDCCH on the PO. Otherwise, the terminal continues to monitor the paging PDCCH on a second MO. Alternatively, in another implementation, the terminal may select, from the plurality of MOs included in the PO based on measurement quality of the SSB, a MO corresponding to an SSB whose channel quality meets a condition, and monitor the paging PDCCH on the MO. The SSB whose channel quality meets the condition may be an SSB with best channel quality.

In this application, to reduce power consumption of the terminal, the terminal may enable the low power consumption mode to detect the WUS. When the WUS is detected, the paging time window is determined based on the first time unit, the first offset, the length L of the paging time window, and the like. The terminal may monitor the paging PDCCH in the normal power consumption mode. Therefore, the terminal may enable the normal power consumption mode based on the start time of the paging time window. For example, the terminal may enable the normal power consumption mode at the start time of the paging time window. Alternatively, the normal power consumption mode is enabled before the start time of the paging time window. Alternatively, the terminal may enable the normal power consumption mode after the start time of the paging time window. This is not limited. Specifically, a specific time when the terminal enables the normal power consumption mode may be affected by the following two factors.
1. When enabling a normal working mode, whether the terminal makes some preparations, for example, receiving a system message, automatic gain control, or time-frequency synchronization. It may be understood that, if the terminal makes some preparations in advance when enabling the normal working mode, the normal working mode may be enabled earlier to avoid delay in monitoring the paging PDCCH in the paging time window. Otherwise, the normal working mode may be enabled later.
2. Whether a distance between the first PO in the paging time window and a start point of the paging time window is long or short. It may be understood that, if the distance between the first PO in the paging time window and the start point of the paging time window is short, the normal power consumption mode may be enabled earlier. Otherwise, the normal power mode may be enabled later.

After the normal power consumption mode is enabled, the terminal may monitor the paging PDCCH on the PO included in the paging time window. If the terminal successfully monitors the paging PDCCH on the PO included in the paging time window, the terminal may continue to enable the normal working mode. For example, in the normal working mode, the terminal receives and decodes the paging DCI through the paging PDCCH. The paging message is received based on scheduling of the paging DCI. The paging message may be carried in a PDSCH. Based on an indication of the paging message, random access is initiated, or another operation is performed.

Alternatively, if the terminal does not monitor the paging PDCCH on the PO included in the paging time window, the terminal may disable the normal power consumption mode. The terminal continues to detect the WUS in the low power consumption mode.

In an implementation, that the terminal enables the low power consumption mode includes: The terminal enables only the low-power receiver. That the terminal enables the normal power consumption mode includes: The terminal enables the main receiver. In this implementation, the terminal may always enable the low-power receiver to detect the WUS. When the WUS is detected, the paging time window is determined based on the time unit in which the WUS is detected; and the main receiver is enabled based on the start time of the paging time window. If the paging PDCCH is monitored in the paging time window, the WUS continues to be detected by using the main receiver Alternatively, if the paging PDCCH failed to be monitored in the paging time window, the main receiver is disabled, and the WUS continues to be detected by using the low-power receiver.

Optionally, because demodulation and decoding capabilities of the terminal are weak in the low power consumption mode, the WUS may use a simple modulation manner. For example, the WUS may use a modulation manner like on-off keying (on-off keying, OOK).

It should be noted that the foregoing content in Embodiment 1 describes a process in which the terminal monitors the paging PDCCH. A process in which the base station sends the paging PDCCH is not limited. For example, in a design, the base station determines the PO for sending the paging PDCCH; the base station determines a time window based on the PO for sending the paging PDCCH; and determines, based on the time window and the first offset value, a time unit for sending the WUS, and sends the WUS in the time unit.

Alternatively, in another implementation, the base station determines the first time unit based on the time unit for sending the WUS, and determines the paging time window based on the first time unit and the first offset value; and the base station randomly selects one or more POs on the POs preconfigured in the paging time window, and sends the paging PDCCH. The first offset value may be determined in advance based on a time at which the terminal enables the main receiver, or the like.

In a design, the base station may select one or more POs from the POs included in the paging time window to send the paging PDCCH. Alternatively, the base station may send the paging PDCCH on all POs in the paging time window. The terminal may monitor the paging PDCCH in sequence on the POs in the paging time window until the PDCCH is monitored, or until the paging time window ends.

### Embodiment 2

As shown in FIG. 5, this application provides a WUS. The WUS includes a first field and a second field. The first field indicates an indication function of the second field. The indication function of the second field includes a paging indication (paging indication, PI) and a random access indication (random access channel, RACH indication, RI). The PI indicates a terminal to monitor a paging PDCCH on a PO, and the RI indicates the terminal to initiate random access. The first field may also be referred to as a flag (flag) field.

It should be noted that the first field may occupy one bit (bit). When a value of the first field is 1, it may indicate that the indication function of the second field is the PI. When the value of the first field is 0, it may indicate that the indication function of the second field is the RI. Certainly, 0 may alternatively indicate the PI, 1 may alternatively indicate the RI, and the like. Alternatively, more bits may be allocated to the first field. In this case, the indication function of the second field indicated by the first field may indicate another function in addition to the PI or the RI. This is not limited.

In a design, the terminal detects the WUS in a first time unit T, and the first field of the WUS indicates that the indication function of the second field is the PI. In this case, the terminal may monitor the paging PDCCH on a PO included in a paging time window after the first time unit T+offset 1. The paging PDCCH may be sent on any PO included in the paging time window. For a specific process in which the terminal monitors the paging PDCCH, reference may be made to the foregoing Embodiment 1.

In another design, the terminal detects the WUS in the first time unit T, the first field of the WUS indicates that the indication function of the second field is the RI, and the RI may carry terminal information of a random access terminal, and the terminal information may be a terminal ID or an ID of a group in which the terminal is located, or a part of the terminal ID, or the like. For example, when the terminal ID is a 24-bit sequence, the RI may carry a last 8-bit sequence in the 24-bit sequence of the ID of the random access terminal. The terminal may determine whether the terminal information carried in the RI of the WUS matches terminal information of the terminal. If the two match, it indicates that the base station indicates the current terminal to initiate random access, and the terminal may enable a main receiver to perform random access. If the two do not match, it indicates that the base station does not indicate the current terminal to initiate random access, and the terminal may continue to remain in a sleep state. Meanings of matching may include: The terminal ID carried in the RI of the WUS is an ID of the current terminal, a part of the ID of the current terminal, the ID of the group in which the current terminal is located, or the like. A concept of a terminal group is described as follows: A plurality of terminals may be grouped into one group, a group ID is allocated to the group, and all terminals in the group share the group ID.

It should be noted that, in the foregoing design, the terminal detects the WUS in the first time unit T, and initiates random access in the first time unit T+offset 2. The offset 2 may be a preparation time period before the terminal performs random access, and in the time period, the terminal may perform at least one of the following operations:
1. The main receiver is enabled to receive a cell SSB, and a cell ID and system information are obtained.
2. Timing and frequency synchronization are obtained, and automatic gain control is performed.
3. Available random access resources, including a time and a frequency at which random access can be initiated, and sequences that can be used for random access, of a cell are obtained from the system information.

It may be understood that, depending on different implementations of the terminal, a sequence of performing the foregoing operations 1 to 3 by the terminal is not limited, or the terminal may synchronously perform the foregoing operations 1 to 3 or the like.

It should be noted that in Embodiment 2, the offset 1, the offset 2, and a length L of the paging time window may be predefined, or configured by the base station for the terminal by using higher layer signaling, or the like. This is not limited.

As shown in FIG. 6, this application provides a process of a communication method, including at least the following steps.

Step 601: A base station sends a WUS.

For example, the base station may first determine a sending occasion of the WUS, and send the WUS on the sending occasion. The terminal may always detect the WUS in a low power consumption mode, for example, the terminal may enable a low-power receiver. For a specific composition of the WUS, refer to the foregoing description in Embodiment 2.

Step 602: The terminal performs a subsequent operation based on the WUS.

In a design, if a first field in the WUS indicates that an indication function of a second field is a PI, the terminal may enable a normal power consumption mode, and monitor a paging PDCCH on a PO included in a paging time window. If the paging PDCCH is successfully monitored on the PO included in the paging time window, paging DCI is received and decoded through the paging PDCCH, a paging message is received based on scheduling of the paging DCI, and a corresponding operation, for example, random access, is performed based on indication information of the paging message. Alternatively, if the paging PDCCH fails to be monitored on the PO included in the paging time window, the normal power consumption mode is disabled, for example, a main receiver is disabled, and the terminal continues to detect the WUS in the low power consumption mode. Alternatively, in another design, if the first field in the WUS indicates that the indication function of the second field is an RI, and terminal information included in the RI matches information about the current terminal, it indicates that the base station indicates the current terminal to initiate random access, and the terminal may enable the normal power consumption mode to initiate random access. Alternatively, if the terminal information included in the RI of the WUS does not match the information of the current terminal, it indicates that the base station does not indicate the current terminal to initiate random access, and the terminal may continue to detect the WUS in the low power consumption mode. In this design, the terminal may directly initiate random access based on an indication of the WUS. Compared with what is specified in NR release-15 (release-15, Rel-15), the terminal receives the paging message based on the scheduling of the paging DCI in the paging PDCCH, and random access is then performed based on an indication of the paging message. This design can shorten steps that need to be performed by the terminal to perform random access, thereby reducing power consumption of the terminal, operation time, and the like.

It should be noted that the WUS provided in Embodiment 2 may be further applied to the solution of Embodiment 1. When the solution in Embodiment 2 is applied to the foregoing Embodiment 1, the indication function of the second field indicated by the first field of the WUS is the PI, which indicates the terminal to monitor the paging PDCCH on the PO. Certainly, in addition to the WUS described in Embodiment 2, the WUS in Embodiment 1 may alternatively use another WUS. This is not limited.

The following describes a process in which a base station configures a PO and a MO for a terminal. In a design, an occurrence time of a PO in a paging time window and an occurrence time of a MO in each PO still comply with a definition of a paging search space set (paging search space set) in the 3GPP protocols. In other words, the terminal may determine the occurrence time of the MO and the PO based on the paging search space set defined in the 3GPP protocols. According to descriptions in the foregoing embodiments, the paging time window may be determined. The paging time window includes at least one PO, and each PO includes at least one MO.

In the current 3GPP protocols, the base station configures the PO or the MO for the terminal by using the paging search space set. The terminal determines one or more POs in configured POs based on UE_ID, and monitors the paging PDCCH on the determined POs. Different from the current 3GPP protocols, in this embodiment of this application, the terminal determines the paging time window according to the foregoing method, and monitors the paging PDCCH on the PO included in the paging time window. In other words, in this embodiment of this application, the paging search space set in the current 3GPP protocols is reused, and the PO or the MO is configured based on the paging search space set in the current 3GPP protocols. A difference is that a manner in which the terminal determines to monitor the paging PDCCH is improved. In this embodiment of this application, the paging time window is determined according to the descriptions in the foregoing embodiments. The terminal monitors the paging PDCCH on one or more POs included in the paging time window.

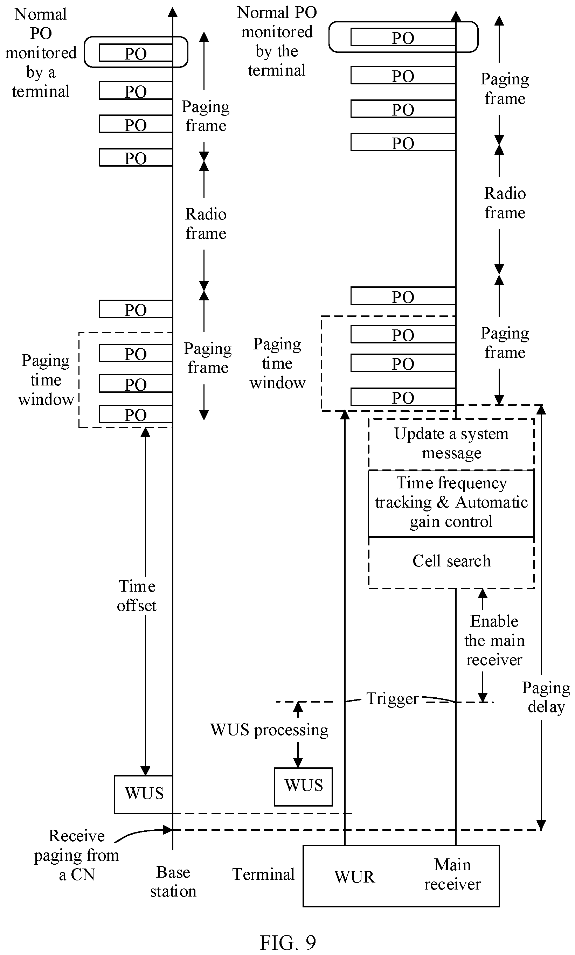

For example, as shown in FIG. 9, when the base station receives a paging message of the terminal from a core network, the base station sends a wake up signal WUS to the terminal. A processing process of the terminal is as follows:
1. The terminal receives the signal sent by the base station in a low power consumption mode. In a schematic diagram of FIG. 9, a terminal enables a low-power receiver in the low power consumption mode, and the low-power receiver is a wakeup radio (wakeup radio, WUR) receiver.
2. The terminal performs operations such as demodulation and decoding on the received signal. For example, if a WUS is resolved in the received signal, a main receiver is woken up, otherwise the terminal continues to work in the low power consumption mode.
3. When detecting the WUS, the terminal enables the main receiver. Optionally, before receiving paging, the terminal may perform a plurality of pre-synchronization operations. For example, the pre-synchronization operations may include at least one of the following operations: cell search, time-frequency tracking, automatic gain control, system message update, and the like.
4. After the foregoing operations are completed, the terminal monitors the paging PDCCH on the PO corresponding to the paging time window.

According to the current 3GPP protocols, the terminal determines, based on the UE_ID, a PO for monitoring the paging PDCCH. According to the current 3GPP protocols, the PO determined by the terminal for monitoring the paging PDCCH may refer to a PO shown in a "circle" in FIG. 9. In the schematic diagram of FIG. 9, the foregoing PO is referred to as a regular PO monitored by the terminal. However, in this embodiment of this application, a paging time window after the terminal enables the main receiver is defined. The terminal monitors the paging PDCCH on the PO included in the paging time window.

According to the current 3GPP protocols, the terminal determines, based on the UE_ID, the PO for monitoring the paging PDCCH. The PO is not in the paging time window, but in a paging frame after the paging time window. According to the current 3GPP protocols, the terminal can monitor the paging PDCCH only after the PO arrives, and a paging delay is large. However, in this embodiment of this application, the terminal monitors the paging PDCCH on the PO included in the paging time window, so that waiting duration for detecting the paging PDCCH can be reduced. Further, in the current 3GPP protocols, there is no wake-up process except when the terminal is powered on each time. In other words, only when the terminal is powered on each time, a process such as determining the PO based on the UE_ID and monitoring the paging PDCCH on the determined PO is performed. In this embodiment of this application, the terminal enables the low-power receiver, disables the main receiver, and monitors the WUS by using the low-power receiver. If the WUS is successfully monitored, the terminal enables the main receiver, and monitors the paging PDCCH on the PO included in the paging time window. The terminal receives a paging message based on scheduling of DCI carried in the paging PDCCH, and performs a process, for example, random access. Afterwards, when the terminal has no service in a preset time period, the terminal may sleep again, disable the main receiver, enable only the low-power receiver, monitor the WUS, and the like, to reduce power consumption of the terminal.

In the foregoing design, according to the paging search space set in the current 3GPP protocols, the PO or the MO may be configured for the terminal, and no new configuration information is introduced. Therefore, compatibility with the current 3GPP protocol may be achieved.

In another design, the PO in the paging time window is configured based on a newly configured paging search space set, and the paging search space set is different from the paging search space set defined in the current 3GPP protocols. For example, a dedicated paging search space set may be configured for the terminal. The dedicated paging search space set is used to configure the PO, the MO, or the like. Then, the terminal may determine the paging time window based on the descriptions in the foregoing embodiments. The base station sends the paging PDCCH on the PO included in the paging time window. The terminal monitors the paging PDCCH on the PO included in the paging time window.

In the foregoing two designs, the terminal monitors the paging PDCCH on the PO or the MO in the paging time window. Once the terminal detects the paging PDCCH, the terminal receives the paging message based on scheduling of the DCI carried in the paging PDCCH. The paging message may be referred to as paging PDSCH data. The UE performs a subsequent operation based on an indication of the paging message, for example, updating the paging message or performing random access. Optionally, if the terminal detects no paging PDCCH in the paging time window, the terminal may fall back to the paging search space set defined in the current 3GPP protocols in a current DRX cycle. The terminal determines the PO or the MO based on the paging search space set defined in the current 3GPP protocols, determines a PO for monitoring the paging PDCCH based on the UE_ID, and monitors the paging PDCCH on the determined PO. For example, in FIG. 9, if the terminal detects no paging PDCCH on the PO in the paging time window, the terminal continues to monitor the paging PDCCH on the PO marked by a "circle" shown in FIG. 9.

The following describes how to configure a PO or a MO based on a paging search space set. The paging search space set may be the paging search space set defined in the current 3GPP protocols, or a dedicated paging search space set newly defined above.

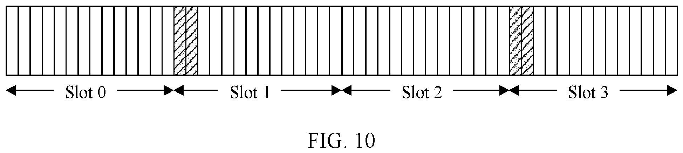

One paging frame PF includes at least one PO. In a typical network configuration, each PO has S MOs, and S is a positive integer greater than or equal to 1. The MO may be defined by using a search space set (search space set) of a PDCCH. The search space set is the foregoing paging search space set. The MO indicates a sending time of the PDCCH, and the MO may appear periodically. For example, the MO may be represented by an occurrence period, a time offset in each period, a time length, and the like. As shown in FIG. 10, a period of the MO defined by the search space set is two slots (slot), and a time offset in the period is one slot, that is, the MO appears only on an odd-numbered slot number, and in each slot, the MO occupies two symbols. The two symbols are first two symbols of a slot.

A quantity of S MOs included in a PO is the same as a quantity of SSBs configured for a cell, and each SSB corresponds to one MO in the PO, that is, a beam of the paging PDCCH sent in the MO is the same as a corresponding SSB. Content of paging PDCCHs sent on different MOs may be the same. Therefore, the terminal may select, based on a beam measurement result of the SSB, a MO with best reception performance to receive the paging PDCCH, or may receive a plurality of paging PDCCHs in a beam polling manner.

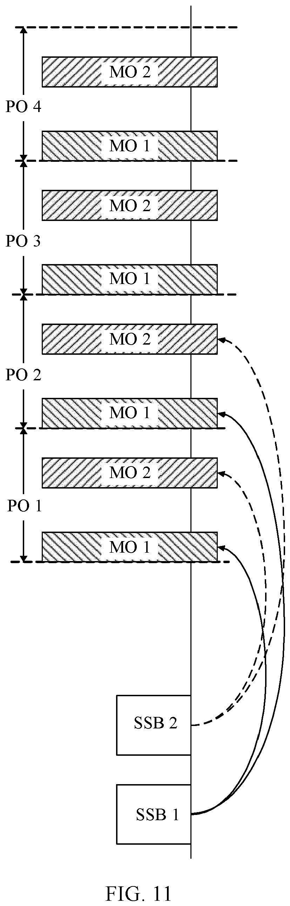

As shown in FIG. 11, two SSBs and four POs are configured for a cell. Therefore, each PO has two MOs that can send a paging PDCCH, and an SSB 1 and an SSB 2 respectively correspond to a MO 1 and a MO 2 in one PO.

If a paging frame PF in a cell contains Ns POs and M SSBs are configured for the cell, a quantity of MOs contained in a PF should be N=Ns*M. A specific MO arrangement manner is as follows: The terminal starts counting from a start point of the PF, and determines, based on a definition of the search space set, a symbol location of each MO until all the NMOs are calculated.

As mentioned above, the MO can be configured by using the paging search space set. A quantity of MOs in a PO may be configured synchronously. In this case, the terminal may determine the occurrence time of the PO based on the foregoing configuration.

It may be understood that, to implement functions in the foregoing embodiments, the base station and the terminal include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed through hardware or hardware driven by computer software depends on particular application scenarios and design constraint conditions of the technical solutions.

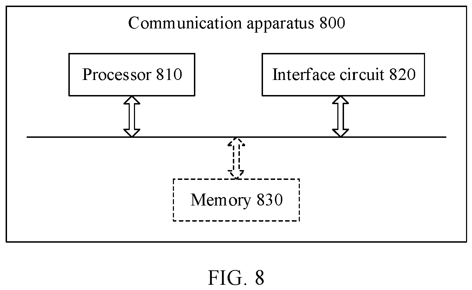

FIG. 7 and FIG. 8 are schematic diagrams of structures of possible communication apparatuses according to embodiments of this application. The communication apparatuses may be configured to implement functions of the terminal or the base station in the foregoing method embodiments. Therefore, beneficial effect of the foregoing method embodiments can also be achieved. In this embodiment of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 7, a communication apparatus 700 includes a processing unit 710 and a transceiver unit 720. The communication apparatus 700 may be configured to implement functions of the terminal or the base station in the method embodiments shown in FIG. 3 or FIG. 6.

When the communication apparatus 700 is configured to implement functions of the terminal in the method embodiment shown in FIG. 3, the transceiver unit 720 is configured to receive configuration information, where the configuration information is used to configure a plurality of paging occasions; and the processing unit 710 is configured to: determine a first time unit based on a time unit in which a wake up signal is detected, select a paging occasion from the plurality of paging occasions based on the first time unit, and monitor a PDCCH on the selected paging occasion.

When the communication apparatus 700 is configured to implement functions of the terminal in the method embodiment shown in FIG. 6, the transceiver unit 720 is configured to detect a wake up signal, where the wake up signal includes a first field and a second field, and the first field indicates an indication function of the second field; and the processing unit 710 is configured to: when the indication function includes a paging indication, monitor a paging physical downlink control channel PDCCH on a paging occasion, or when the indication function includes a random access indication, initiate random access on a random access resource.

When the communication apparatus 700 is configured to implement functions of the base station in the method embodiment shown in FIG. 6, the processing unit 710 is configured to determine a sending occasion of a wake up signal; and the transceiver unit 720 is configured to: send the wake up signal on the sending occasion, where the wake up signal includes a first field and a second field, the first field indicates an indication function of the second field, and the indication function includes a paging indication indicating the terminal to monitor a paging physical downlink control channel PDCCH on a paging occasion, or the indication function includes a random access indication indicating the terminal to initiate random access.

For more detailed descriptions of the processing unit 710 and the transceiver unit 720, directly refer to related descriptions in the method embodiment shown in FIG. 3 or FIG. 6. Details are not described herein.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to store instructions to be executed by the processor 810, store input data required for running the instructions by the processor 810, or store data generated after the processor 810 runs the instructions.

When the communication apparatus 800 is configured to implement the method shown in FIG. 3 or FIG. 6, the processor 810 is configured to perform functions of the processing unit 710, and the interface circuit 820 is configured to perform functions of the transceiver unit 720.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to the base station.

When the communication apparatus is a module used in a base station, the module in the base station implements a function of the base station in the foregoing method embodiment. The module in the base station receives information from another module (for example, a radio frequency module or an antenna) in the base station, where the information is sent by the terminal to the base station; or the module in the base station sends information to another module (for example, a radio frequency module or an antenna) in the base station, where the information is sent by the base station to the terminal. The module in the base station herein may be a baseband chip of the base station, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of processes or functions in embodiments of this application are executed. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state disk. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, or C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

## Claims

1. A paging method, comprising:
determining a first time unit based on a time unit in which a wake up signal is detected;
receiving configuration information, wherein the configuration information is used to configure a plurality of paging occasions;
selecting a paging occasion from the plurality of paging occasions based on the first time unit; and
monitoring a paging physical downlink control channel PDCCH on the selected paging occasion.

2. The method according to claim 1, wherein the selecting a paging occasion from the plurality of paging occasions based on the first time unit comprises:
determining a paging time window based on the first time unit; and
selecting the paging occasion in the paging time window from the plurality of paging occasions.

3. The method according to claim 2, wherein the determining a paging time window based on the first time unit comprises:
determining a start time of the paging time window based on the first time unit and a preset first offset value; and
determining an end time of the paging time window based on the start time of the paging time window and a length of the paging time window.

4. The method according to any one of claims 1 to 3, wherein the wake up signal is modulated in an on-off keying manner.

5. The method according to claim 3 or 4, wherein detecting the wake up signal in a low power consumption mode further comprises: enabling a normal power consumption mode based on the start time of the paging time window.

6. The method according to claim 5, further comprising:
if the paging PDCCH fails to be monitored on the selected paging occasion in the paging time window, disabling the normal power consumption mode.

7. The method according to any one of claims 1 to 6, wherein the wake up signal comprises a first field and a second field, the first field indicates an indication function of the second field, the indication function comprises a paging indication and a random access indication, the paging indication indicates a terminal to monitor the paging PDCCH on the selected paging occasion, and the random access indication indicates the terminal to initiate random access.

8. A communication method, comprising:
detecting a wake up signal, wherein the wake up signal comprises a first field and a second field, and the first field indicates an indication function of the second field; and
when the indication function comprises a paging indication, monitoring a paging physical downlink control channel PDCCH on a paging occasion; or
when the indication function comprises a random access indication, initiating random access on a random access resource.

9. The method according to claim 8, wherein the wake up signal is detected in a low power consumption mode.

10. The method according to claim 8 or 9, wherein the paging PDCCH is monitored in a normal power consumption mode.

11. A communication method, comprising:
determining a sending occasion of a wake up signal; and
sending the wake up signal on the sending occasion, wherein the wake up signal comprises a first field and a second field, the first field indicates an indication function of the second field, and the indication function comprises a paging indication indicating a terminal to monitor a paging physical downlink control channel PDCCH on a paging occasion, or the indication function comprises a random access indication indicating the terminal to initiate random access.

12. A communication apparatus, comprising a unit configured to perform the method according to any one of claims 1 to 7, a unit configured to perform the method according to any one of claims 8 to 10, or a unit configured to perform the method according to claim 11.

13. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 7, the method according to any one of claims 8 to 10, or the method according to claim 11 by using a logic circuit or executing code instructions.

14. A computer-readable storage medium, wherein the storage medium stores a computer program or instructions, and when the computer program or the instructions is/are executed by a communication apparatus, the method according to any one of claims 1 to 7, the method according to any one of claims 8 to 10, or the method according to claim 11 is performed.
